(19) Europäisches Patentamt
European Patent Office
Office européen des brevets

(11) EP 3 255 378 B1

(12) **EUROPÄISCHE PATENTSCHRIFT**

(45) Veröffentlichungstag und Bekanntmachung des Hinweises auf die Patenterteilung:
**08.04.2020   Patentblatt 2020/15**

(51) Int Cl.:
*G01B 21/04* (2006.01)   *G01B 21/20* (2006.01)
*G01B 21/24* (2006.01)   *G01B 5/00* (2006.01)
*G01B 5/213* (2006.01)   *G01B 11/00* (2006.01)
*G01B 11/255* (2006.01)   *B23Q 1/44* (2006.01)
*B23Q 17/20* (2006.01)   *G01M 11/02* (2006.01)
*G02B 27/62* (2006.01)

(21) Anmeldenummer: **17155449.6**

(22) Anmeldetag: **09.02.2017**

(54) **MESSGERÄT UND VERFAHREN ZUR JUSTAGE DER LAGE EINES ROTATIONSSYMMETRISCHEN WERKSTÜCKS**

MEASURING DEVICE AND METHOD FOR ADJUSTING THE POSITION OF A ROTATION-SYMMETRICAL WORKPIECE

APPAREIL DE MESURE ET PROCÉDÉ DE RÉGLAGE DE LA POSITION D'UNE PIÈCE À SYMÉTRIE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2016   DE 102016110453**

(43) Veröffentlichungstag der Anmeldung:
**13.12.2017   Patentblatt 2017/50**

(73) Patentinhaber: **CARL MAHR HOLDING GMBH 37073 Göttingen (DE)**

(72) Erfinder:
• **Dr. Wiegmann, Axel**
  **07607 Eisenberg (DE)**
• **Mika, Stefan**
  **07745 Jena (DE)**
• **Kurch, Ralf**
  **99098 Erfurt (DE)**

(74) Vertreter: **Rüger Abel Patentanwälte PartGmbB Patentanwälte Webergasse 3 73728 Esslingen a. N. (DE)**

(56) Entgegenhaltungen:
DE-B3-102012 023 377     JP-B2- 4 699 714
US-A1- 2011 258 867

**Beschreibung**

Die Erfindung betrifft ein Verfahren zur Justage der Lage eines rotationssymmetrischen Werkstücks mit einer gekrümmten oberen Fläche in einem Messgerät sowie ein Messgerät zur Durchführung des Verfahrens.

US 4 731 934 A beschreibt ein Messgerät mit einem um eine Drehachse drehbaren Werkstückträger. Zur Messung wird der Werkstückträger mit dem darauf angeordneten Werkstück gedreht. Für eine genaue Messung ist es dabei von Bedeutung, die Achse des Werkstücks mit der Drehachse in Übereinstimmung zu bringen. Das Messgerät dient zur Vermessung von länglichen Werkstücken mit einer zylindrischen Mantelfläche. In Richtung der Drehachse wird mit Abstand oben und unten am Werkstück eine Messung in Umfangsrichtung an der Mantelfläche des Werkstücks vorgenommen. Daraus kann die Abweichung der Achse des Werkstücks gegenüber der Drehachse ermittelt werden und eine entsprechende Positionierung des Werkstückträgers erfolgen. Dieses Verfahren eignet sich nur für Werkstücke mit einer ausreichenden hohen Mantelfläche in Richtung der Drehachse. Rotationssymmetrische Körper wie Linsen, Asphären oder dergleichen können auf diese Weise nicht justiert werden.

Ein ähnliches Verfahren ist beispielsweise auch aus DE 101 02 383 A1 oder DE 103 40 851 A1 bekannt.

Ein in DE 10 2007 015 947 B4 beschriebenes Verfahren führt vor der eigentlichen Messung eines Werkstücks Probemessungen aus. Dabei wird der Zenit des Werkstücks ermittelt, beispielsweise aus mehreren parallelen Tastschnittmessungen. Der Werkstückträger wird anschließend so justiert, dass der Zenit des Werkstücks in der Ebene liegt, in der der Tastschnitt mittels des Tastarms des Messgerätes durchgeführt wird.

Aus WO 2009/124767 A1 ist ein Messgerät bekannt, das zur Ermittlung der Symmetrieachse eines rotationssymmetrischen Werkstücks einen speziellen Zentrierungssensor aufweist, der als Autokollimator ausgeführt sein kann. Mit einem derartigen Autokollimator kann die Symmetrieachse des sphärischen Teils der Oberfläche des Werkstücks ermittelt werden. Der Autokollimator erfasst die Taumelbewegung, wenn die Symmetrieachse des Werkstücks nicht mit einer Drehachse eines drehend angetriebenen Werkstückträgers übereinstimmt. Dieses Messgerät erfordert mithin einen speziellen zusätzlichen Sensor, der bei vielen Universalmessgeräten (Formmessgeräten und/oder Koordinatenmessgeräten) nicht zur Verfügung steht.

DE 10 2012 023 377 B3 beschreibt ein Verfahren und eine Vorrichtung zur Messung der Position und Justage eines asphärischen Körpers. Bei diesen Verfahren wird in wenigstens zwei unterschiedlichen Radialabständen zu der Drehachse, um die ein Werkstück gedreht wird, in mehreren Drehlagen jeweils ein Positionswert auf der oberen Fläche des rotationssymmetrischen Werkstücks gemessen. Die Messpunkte liegen mit anderen Worten bei jeder durchgeführten Messung auf einem Kreis um die Drehachse. Ist die Symmetrieachse des Werkstücks nicht exakt entlang der Drehachse ausgerichtet, beschreiben die Messpunkte jeweils eine Sinuskurve. Aus zwei oder mehr solcher Sinuskurven kann dann die Neigung der Symmetrieachse des Werkstücks gegenüber der Drehachse sowie die Verschiebung der Symmetrieachse relativ zur Drehachse berechnet werden. Dies geschieht insbesondere dadurch, dass zunächst entweder die Verschiebung oder die Neigung anhand der einen gemessenen Sinuskurve geschätzt und unter Verwendung dieser Schätzung der jeweils andere Wert aus der zweiten gemessenen Sinuskurve ermittelt wird. Diese Schritte können iterativ wiederholt werden, bis eine ausreichend genaue Bestimmung erfolgt ist und eine entsprechende Justage vorgenommen werden kann.

Aus DE 196 51 232 C1 ist ein Werkstückträger mit einer ansteuerbaren Justageanordnung bekannt, um die Lage eines Werkstücks einstellen zu können.

US 2011/0258867 A1 beschreibt eine Vorrichtung und ein Verfahren zur Oberflächenmessung. Dabei können auch gekrümmte Oberflächen eines Werkstücks, beispielsweise einer Linse gemessen werden. Das Werkstück ist auf einem Drehtisch angeordnet und die Symmetrieachse des Werkstücks muss mit der Drehachse des Drehtellers ausgerichtet werden. Dazu wird ein durch das Messen erfassbares Geometriemerkmal am Werkstück verwendet, das von einer Kante am Rand der Linse gebildet ist. In einer Drehstellung des Drehtellers wird radial zur Drehachse des Drehtellers eine linienförmige Messung über die Kante hinweg vorgenommen. Anschließend wird der Drehteller um 180° gedreht, und es wird eine zweite Messung über die Kante vorgenommen. In den beiden Messbahnen ist die Kante deutlich identifizierbar. Durch Verschieben und/oder Kippen der einen Messbahn relativ zu der anderen Messbahn können diese zur Deckung gebracht werden. Die Verschiebung und die Kippung, die hierfür notwendig ist, beschreibt die Abweichung der Symmetrieachse des Werkstücks gegenüber der Drehachse. Dadurch ist es möglich, die Drehachse und die Symmetrieachse in Deckung zu bringen. Nachteilig ist dabei, dass das Werkstück ein in den Messbahnen eindeutig identifizierbares Merkmal aufweisen muss.

Ausgehend vom Stand der Technik kann es als Aufgabe der vorliegenden Erfindung angesehen werden, ein verbessertes Verfahren bzw. ein verbessertes Messgerät zur Justage der Lage eines rotationssymmetrischen Werkstücks anzugeben.

Diese Aufgabe wird mit einem Verfahren gemäß Patentanspruch 1 sowie einem Messgerät gemäß Patentanspruch 16 gelöst.

Die Erfindung ist zur Justage der Lage von rotationssymmetrischen Werkstücken mit einer gekrümmten oberen Fläche vorgesehen. Die Werkstücke müssen keine zylindrische Mantelfläche aufweisen. Insbesondere kann es sich um Werkstücke mit asphärische oberer Fläche handeln.

Das Messgerät hat einen Werkstückträger, der um eine Drehachse antreibbar ist. Hierfür hat das Messgerät eine rotative Maschinenachse, die den Werkstückträger antreibt. Eine Justageanordnung ist dazu eingerichtet, eine Werkstückträgerachse gegenüber der Drehachse zu kippen und rechtwinklig zu der Drehachse in zwei unterschiedliche Raumrichtungen translatorisch zu bewegen. Die Drehachse verläuft parallel oder entlang einer Koordinatenachse des Maschinenkoordinatensystems. Das Messgerät hat außerdem eine Sensoreinheit zum Messen von Messpunkten in dem Maschinenkoordinatensystem auf einer gekrümmten oberen Fläche des Werkstücks. Die Sensoreinheit erfasst dabei die Koordinatenwerte eines Messpunkts im Maschinenkoordinatensystem auf der gekrümmten oberen Fläche (Außenfläche) des Werkstücks.

Um das Werkstück zu justieren wird der Werkstückträger mit dem Werkstück zunächst in eine erste Drehlage um die Drehachse gebracht. In dieser ersten Drehlage werden mehrere Messpunkte innerhalb einer Messebene des Maschinenkoordinatensystems gemessen. Die Messebene ist vorzugsweise rechtwinklig zu einer der Koordinatenachsen des Maschinenkoordinatensystems ausgerichtet und kann die Drehachse aufweisen oder parallel dazu ausgerichtet sein.

Im Anschluss daran wird der Werkstückträger mit einem Werkstück um einen Drehwinkel um die Drehachse in eine zweite Drehlage gedreht. In dieser zweiten Drehlage werden in derselben Messebene des Maschinenkoordinatensystems mehrere Messpunkte gemessen.

Anhand der jeweils mehreren Messpunkte in den beiden Drehlagen kann die Istlage des Werkstücks durch Einpassen der Messpunkte in eine bekannte Sollgeometrie der oberen Fläche ermittelt werden. Die Solllage des Werkstücks ist vorgegeben. Unter der Lage des Werkstücks ist dessen Position im Raum sowie die Ausrichtung der Symmetrieachse im Raum zu verstehen. In der Solllage fällt die Symmetrieachse des Werkstücks mit der Drehachse des Werkstückträgers zusammen. Die Abweichung von der Istlage zu der Solllage kann durch geeignete Parameter beschrieben werden. Erfindungsgemäß wird ein Kippwinkel sowie eine Verschiebung definiert, die die Abweichung zwischen der Solllage und der Istlage beschreiben. Der Kippwinkel beschreibt die Kippung oder Neigung der Symmetrieachse des Werkstücks gegenüber der Drehachse und die Verschiebung beschreibt eine radiale Positionsabweichung der Symmetrieachse von der Drehachse in einer Situation, nachdem die Symmetrieachse um eine Kippstelle, die durch die Justageanordnung definiert ist, zur Eliminierung des ursprünglich vorhandenen Kippwinkels gekippt wurde. Auf Basis des ermittelten Kippwinkels und der Verschiebung kann die Justageanordnung angesteuert werden, um die Istlage in Übereinstimmung mit der Solllage zu bringen.

Erfindungsgemäß kann mit lediglich zwei Messwertfolgen von jeweils mehreren Messpunkten entlang jeweils einer Konturlinie der oberen Fläche in der Messebene bei unterschiedlichen Drehlagen des Werkstücks bereits die Abweichung ermittelt und eine entsprechende Justage ausgeführt werden. Das Verfahren kann mithin in kurzer Zeit eine gute Justage des Werkstücks erreichen. Zusätzliche spezifische Sensoren sind nicht erforderlich. Das Verfahren lässt sich mit den ohnehin vorhandenen Sensoren auf Universalmessgeräten wie Formtestern und/oder Konturmessgeräten durchführen. Mithin kann es sich bei dem erfindungsgemäßen Messgerät beispielsweise um einen Formtester bzw. eine Formmessmaschine und/oder ein Konturmessgerät und/oder ein Koordinatenmessgerät handeln, die eine ansteuerbare Justageanordnung sowie einen um die Drehachse antreibbaren Werkstückträger aufweisen. Diese Messgeräte sind nicht speziell auf eine einzige Messaufgabe eingerichtet, sondern universell für unterschiedliche Aufgaben geeignet. Dennoch kann mittels der Erfindung auch auf solchen Messgeräten eine einfache und gute Justage von rotationssymmetrischen Werkstücken mit einer gekrümmten, beispielsweise konvexen oder konkaven oberen Fläche durchgeführt werden.

Es ist vorteilhaft, wenn der ermittelte Kippwinkel jeweils eine Kippwinkelkomponente um eine von den beiden Koordinatenachsen des Maschinenkoordinatensystems hat, die rechtwinklig zur Drehachse ausgerichtet sind. Entsprechend kann die Justageanordnung zwei Kippachsen aufweisen, die die Werkstückträgerachse der Kippwinkelkomponenten kippen bzw. neigen können.

Die ermittelte Verschiebung kann zwei oder drei Verschiebungskomponenten aufweisen. Die Verschiebung hat vorzugsweise zwei Verschiebungskomponenten entlang unterschiedlicher Koordinatenachsen rechtwinklig zur Drehachse und optional eine weitere Verschiebungskomponente in Richtung parallel zur Drehachse. Entsprechend dieser Verschiebungskomponenten kann die Justageanordnung des Messgeräts wenigstens zwei translatorische Achsen zur Verstellung des Werkstückträgers aufweisen.

Bei einer vorteilhaften Ausführungsform wird im Anschluss an die Ansteuerung der Justageanordnung geprüft, ob die Istlage mit der Solllage ausreichend genau übereinstimmt. Ist keine ausreichend genaue Übereinstimmung gegeben, können die Messungen in den beiden Drehlagen wiederholt und aktuelle Werte für die Verschiebung und den Kippwinkel ermittelt werden, die dann als Basis für eine weitere Ansteuerung der Justageanordnung dienen. Es kann dann erneut geprüft werden, ob nach diesem zweiten Iterationsschritt eine ausreichend genaue Übereinstimmung vorliegt. Dieser iterative Ablauf kann mehrfach solange wiederholt werden, bis vorgegebene Genauigkeit erreicht ist oder keine wesentliche Verbesserung der Genauigkeit durch weitere Iterationen erreicht werden kann.

Die in den unterschiedlichen Drehlagen des Werkstückträgers gemessenen Messpunkte werden über die Sensoreinheit zunächst als Messpunkte im Maschinenkoordinatensystem erfasst. Beim Ermitteln des Kippwinkels und der Verschiebung werden die Messpunkte in Abhängigkeit von der jeweiligen zugehörigen Drehlage zunächst in das Werkstückkoordinatensystem des Werkstücks transformiert.

Die in das Werkstückkoordinatensystem des Werkstücks transformierten Messpunkte werden zur Ermittlung des Kippwinkels in eine bekannte Sollform bzw. Sollgeometrie der oberen Fläche des Werkstücks eingepasst. Die Einpassung erfolgt derart, dass ein Fehler oder eine Abweichung zwischen den Messpunkten, die die gemessene Geometrie des Werkstücks beschreiben, und der bekannten Sollgeometrie des Werkstücks minimal ist. Das Minimieren des Fehlers kann beispielsweise durch bekannte mathematische Verfahren, wie etwa das Verfahren der kleinsten Fehlerquadrate ermittelt werden.

Bei einem Ausführungsbeispiel wird jedem Messpunkt jeweils ein Zielpunkt der Sollgeometrie zugeordnet. Von jedem Messpunkt kann dann ein Vektor zu dem zugeordneten Zielpunkt definiert werden. Anhand dieser Vektoren kann die Einpassung der Messpunkte in die Sollgeometrie erfolgen.

Es ist vorteilhaft, wenn die Sollgeometrie des Werkstücks so vorgegeben ist, dass sie gleichzeitig die Solllage des Werkstücks beschreibt. Dadurch wird durch die Sollgeometrie nicht nur die gewünschte Form der oberen Fläche beschrieben, sondern auch deren Position und Ausrichtungen gegenüber der Drehachse. Dabei ist es möglich, dass bei der Bestimmung der Abweichung zwischen der Istlage und der Solllage - beispielsweise von Vektoren von den Messpunkten zu den Zielpunkten - anhand der Abweichung bzw. der Vektoren der Kippwinkel und die Verschiebung ermittelt werden. Durch geeignete Auswahl der Verschiebung und des Kippwinkels kann beispielsweise die Abweichung zwischen der anhand der Messpunkte gemessenen Geometrie und der Solllage minimiert werden.

Es ist vorteilhaft, wenn der Koordinatenursprung des Werkstückkoordinatensystems auf der Symmetrieachse des rotationssymmetrischen Werkstücks auf der oberen Fläche liegt. Vorzugsweise entspricht dies dem Zenit des konvexen rotationssymmetrischen Werkstücks.

Bei dem erfindungsgemäßen Verfahren ist es möglich, dass in mehr als zwei Drehlagen jeweils mehrere Messpunkte gemessen werden. Das Drehen des Werkstückträgers mit dem Werkstück um die Drehachse und das anschließende Messen der Messpunkte in der eingestellten Drehlage kann mehrfach wiederholt werden. Zumindest wird in zwei unterschiedlichen Drehlagen gemessen. Der Winkel zwischen den unterschiedlichen Drehlagen, in denen jeweils eine Messung erfolgt, stellt einen Solldrehwinkel zwischen zwei aufeinanderfolgenden Drehlagen dar, der durch Ansteuerung der rotativen Maschinenachse des Messgeräts eingestellt wird. Der Solldrehwinkel beträgt vorzugsweise 180° geteilt durch die Anzahl der unterschiedlichen Drehlagen, in denen gemessen wird. Der tatsächlich eingestellte Drehwinkel kann bei einer bevorzugten Ausführungsform von dem ermittelten Solldrehwinkel betragsmäßig um maximal 10° oder um maximal 5° abweichen.

Bei der vorstehend erläuterten Durchführung der Justage wird davon ausgegangen, dass die genaue Achsanordnung der Justageanordnung bekannt ist. Sollte bei einem Messgerät die Lage der Justageachsen und insbesondere der Kippachsen nicht mit ausreichender Genauigkeit bekannt sein, kann nach den wenigstens zwei Messungen in unterschiedlichen Drehlagen und der anschließenden erfolgten Ermittlung eines ersten Wertes zumindest für den Kippwinkel wie folgt vorgegangen werden:

Die Justageeinheit wird zum Kippen des Werkstücks abhängig von dem ermittelten Wert des Kippwinkels angesteuert. Anschließend wird das Werkstück erneut gemessen. Es werden wiederum wenigstens zwei unterschiedliche Drehlagen eingestellt und jeweils wenigstens eine Messung durchgeführt.

Anschließend ist bekannt, wie sich die Istlage des Werkstücks durch das Kippen mittels der Kippachsen der Justageanordnung verändert hat. Dadurch lässt sich ein Zusammenhang zwischen der tatsächlichen Kippung des Werkstücks und der Ansteuerung der Justageanordnung zur Erzielung der Kippung ermitteln.

Anschließend können die Messungen in den unterschiedlichen Drehlagen wiederholt und jeweils ein aktueller Wert für den Kippwinkel und die Verschiebung ermittelt werden. Dann kann die Justageanordnung mittels der aktuellen Werte für den Kippwinkel und die Verschiebung angesteuert werden, um die Istlage des Werkstücks mit der gewünschten Solllage in Übereinstimmung zu bringen.

Dieses Verfahren kann mittels einer Steuereinrichtung des Messgeräts durchgeführt werden, die die vorhandenen Maschinenachsen, die Justageanordnung und die Sensoreinheit zur Durchführung der Messungen ansteuert und von der Sensoreinheit die entsprechenden Sensormesswerte erhält. Die erforderlichen Berechnungen werden in der Steuereinrichtung durchgeführt.

Es ist außerdem vorteilhaft, wenn ein Höhenprofil des Werkstücks, das während einer Messung in einer bestimmten Drehstellung aufgenommen wird, einen Schnittpunkt mit einem anderen Höhenprofil hat, das während einer Messung in einer anderen Drehstellung und vorzugsweis in der benachbarten Drehstellung aufgenommen wurde. Es ist auch möglich, das sämtliche aufgenommene Höhenprofile einen gemeinsamen Schnittpunkt aufweisen, wenn die Drehachse des Messgeräts in der Messebene liegt, in der die einzelnen Höhenprofile aufgenommen werden. In diesem Fall können sich sämtliche Höhenprofile an einem Schnittpunkt schneiden, der auf der Drehachse liegt.

Die Steuereinrichtung kann die Berechnungsergebnisse und/oder die Messwerte und/oder andere daraus abgeleitete Ergebnisse oder Rechenwerte über eine geeignete Schnittstelle anzeigen oder zu einer externen Einheit übertragen.

Die Erfindung wird durch die Ansprüche definiert. Vorteilhafte Ausführungen der Erfindung ergeben sich aus den abhängigen Ansprüchen, der Beschreibung und der Zeichnung. Nachfolgend werden bevorzugte Ausführungsbeispiele anhand der beigefügten Zeichnung im Einzelnen erläutert. Es zeigen:

Figur 1 eine schematische Prinzipdarstellung eines Ausführungsbeispiels eines Messgeräts mit einem zu messenden Werkstück,

Figur 2 eine schematische Prinzipdarstellung der ermittelten Verschiebung und des Kippwinkels der Symmetrieachse des Werkstücks gegenüber einer Drehachse des Messgeräts,

Figuren 3a bis 3c eine Prinzipdarstellung der Justage des Werkstücks, wobei dessen Symmetrieachse entlang der Drehachse des Messgeräts ausgerichtet wird,

Figur 4 eine Prinzipdarstellung einer ersten Messung auf einer oberen Fläche des Werkstücks in einer Messebene in einer ersten Drehlage,

Figur 5 eine Prinzipdarstellung einer Messung auf einer oberen Fläche des Werkstücks in der Messebene in einer zweiten Drehlage des Werkstücks,

Figur 6 eine qualitative Darstellung einer beispielhaften Messung in der ersten Drehstellung,

Figur 7 eine qualitative Darstellung einer beispielhaften Messung in der zweiten Drehlage,

Figur 8 eine Prinzipdarstellung zur Anpassung der gemessenen Messpunkte auf der Oberfläche des Werkstücks in eine Sollgeometrie der Oberfläche und

Figur 9 eine Prinzipdarstellung einer weiteren Vorgehensweise zur Einpassung der gemessenen Messwerte in eine bekannte Sollgeometrie der oberen Fläche des Werkstücks.

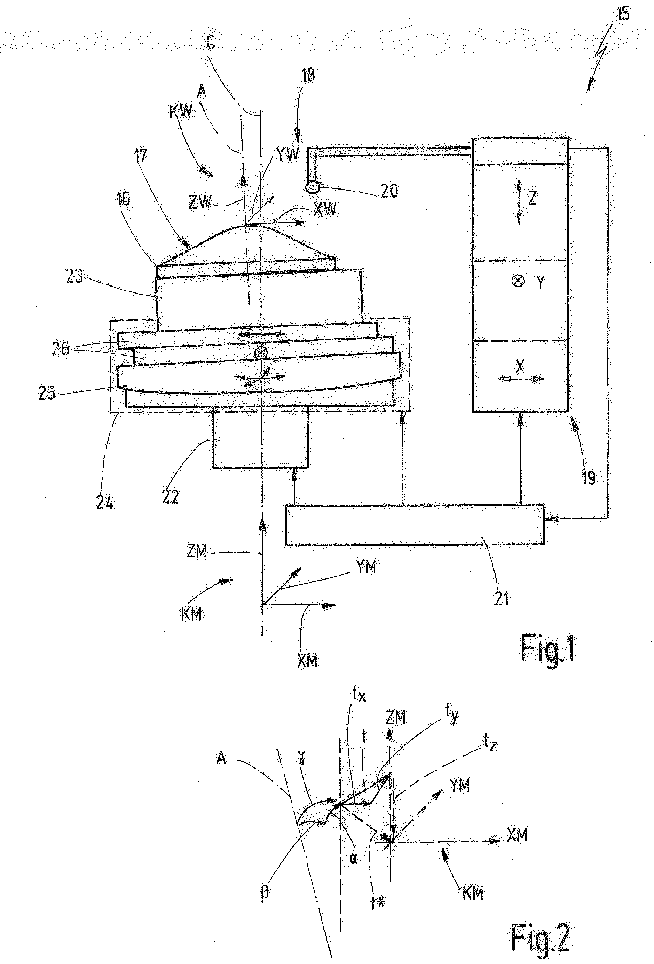

In Figur 1 ist ein Ausführungsbeispiel eines Messgeräts 15 nach Art eines Blockschaltbildes schematisch veranschaulicht. Das Messgerät 15 kann ein Koordinatenmessgerät oder ein Formmessgerät sein und ist universell für mehrere Messaufgaben einsetzbar. Es ist dazu eingerichtet, ein rotationssymmetrisches Werkstück 16 mit einer gekrümmten oberen Fläche 17 zu messen. Hierfür können auf der oberen Fläche 17 Messpunkte aufgenommen werden. Jeder Messpunkt ist dabei durch einen Punkt in einem Maschinenkoordinatensystem KM definiert. Das Maschinenkoordinatensystem ist beispielsgemäß als kartesisches Koordinatensystem ausgestaltet mit drei Koordinatenachsen, nämlich einer X-Koordinatenachse XM in einer X-Richtung, einer Y-Koordinatenachse YM in Y-Richtung und einer Z-Koordinatenachse ZM in Z-Richtung.

Ein Werkstückkoordinatensystem KW hat eine Z-Koordinatenachse ZW, die entlang einer Symmetrieachse A des rotationssymmetrischen Werkstücks 16 ausgerichtet ist. Der Koordinatenursprung befindet sich vorzugsweise an der Stelle, an der die Symmetrieachse A die gekrümmte obere Fläche 17 schneidet. Beim Ausführungsbeispiel ist die obere Fläche 17 konvex gekrümmt und hat im Koordinatenursprung an der Symmetrieachse A ihren Zenit. Bei dem Werkstück 16 handelt es sich beispielsgemäß um ein Werkstück mit einer asphärischen oberen Fläche 17. Das Werkstückkoordinatensystem KW hat außerdem eine X-Koordinatenachse XW und eine Y-Koordinatenachse YW, die jeweils rechtwinklig zueinander und rechtwinklig zur Z-Koordinatenachse ZW ausgerichtet sind und ein kartesisches Koordinatensystem KW bilden.

Das Messgerät 15 hat eine Sensoreinheit 18 zur Aufnahme von Messpunkten auf der gekrümmten oberen Fläche 17 des Werkstücks 16. Die Sensoreinheit 18 kann dabei über eine Maschinenachsanordnung 19 relativ zum Werkstück 16 bewegt werden. Bei dem hier beschriebenen Ausführungsbeispiel weist die Maschinenachsanordnung 19 drei translatorische Maschinenachsen auf, mit denen die Sensoreinheit 18 jeweils in Richtung einer der Koordinatenachsen XM, YM, ZM des Maschinenkoordinatensystems KM bewegt werden kann. Zusätzlich oder alternativ zu den translatorischen Maschinenachsen der Maschinenachsanordnung 19 könnten auch eine oder mehrere rotative Maschinenachsen vorgesehen sein.

Die Sensoreinheit 18 weist einen Sensor 20 auf, beispielsweise einen optisch messenden oder taktilen Sensor 20. Die Sensoreinheit 18 übermittelt ein Sensorsignal an eine Steuereinrichtung 21. In der Steuereinrichtung 21 kann aus dem Sensorsignal und der Drehlage des Werkstückträgers 23 um die Drehachse C jedem Messpunkt auf der Außenfläche und beispielsgemäß auf der oberen Fläche 17 des Werkstücks 16 ein Koordinatenquadrupel $x_{ij}$, $y_{ij}$, $z_{ij}$, $c_i$ im Maschinenkoordinatensystem KM zugeordnet werden. Die Steuereinrichtung 21 steuert auch die Maschinenachsanordnung 19 mit den translatorischen und/oder rotatorischen Maschinenachsen.

Das Messgerät 15 hat außerdem einen mittels einer rotativen Maschinenachse 22 drehbar um eine Drehachse C antreibbaren Werkstückträger 23. Der Werkstückträger 23 ist dazu eingerichtet, das Werkstück 16 zu halten. Der Werkstückträger 23 kann hierfür eine geeignete Werkstückhalteeinrichtung aufweisen, so dass sich das Werkstück 16 während der Messung nicht relativ zum Werkstückträger 23 bewegen kann. Die rotative Maschinenachse 22 wird durch die Steuereinrichtung 21 angesteuert.

Außerdem weist das Messgerät 15 eine Justageanordnung 24 auf. Über die Justageanordnung 24 kann der Werkstückträger 23 mit dem darauf angeordneten Werkstück 16 zum Messen in eine gewünschte Lage gebracht werden. Hierfür hat die Justageanordnung 24 wenigstens eine und beispielsgemäß mehrere Justageachsen, die als translatorische Achsen bzw. Schwenk- oder Kippachsen ausgeführt sein können. Bei dem veranschaulichten Beispiel hat die Justageanordnung 24 einen Kipptisch 25, mittels dem der Werkstückträger 23 bzw. das darauf angeordnete Werkstück 16 um zwei rechtwinklig zueinander ausgerichtete Achsen geschwenkt bzw. gekippt werden kann.

Der Kipptisch 25 kann den Werkstückträger 23 mit dem Werkstück 16 um eine erste Kippachse kippen, die parallel zur X-Koordinatenachse XW des Werkstückkoordinatensystems KW ausgerichtet ist und um eine zweite Kippachse, die parallel zur Y-Koordinatenachse YW des Werkstückkoordinatensystems KW ausgerichtet ist.

Die Justageanordnung 24 hat außerdem zwei translatorische Justageachsen 26, wobei die eine translatorische Justageachse den Werkstückträger 23 parallel zur X-Koordinatenachse des Werkstückkoordinatensystems KW und die jeweils andere translatorische Justageachse 26 den Werkstückträger 23 parallel zur Y-Koordinatenachse des Werkstückkoordinatensystems KW verschieben kann.

Die Justageanordnung 24 wird durch die Steuereinrichtung 21 angesteuert. Die Steuereinrichtung 21 gibt die Drehlage $c_i$ um die Drehachse C sowie die Positionen für die Maschinenachsanordnung 19 vor. Die jeweiligen Lage- bzw. Positionswerte bezogen auf das Maschinenkoordinatensystem KM sind daher in der Steuereinrichtung 21 als Sollwerte bekannt. Es ist möglich, die jeweilige Position der Achsen sensorisch zu erfassen und an die Steuereinrichtung 21 zu übermitteln, so dass in der Steuereinrichtung 21 auch die Istwerte vorliegen, beispielsweise um eine Regelung durchzuführen.

Über die Justageanordnung 24 kann die Symmetrieachse A des Werkstücks 16 bzw. eine Werkstückträgerachse gegenüber der Drehachse C gekippt und relativ zur Drehachse C in X-Richtung und Y-Richtung des Werkstückkoordinatensystems KW bewegt werden.

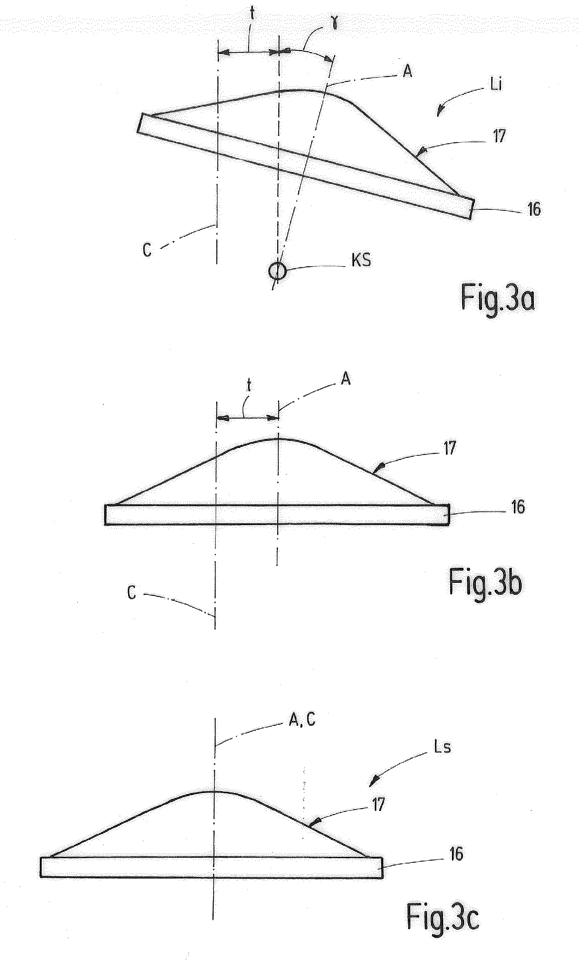

In Figur 1 ist schematisch veranschaulicht, dass das auf dem Werkstückträger 23 angeordnete Werkstück 16 gegenüber der Drehachse C nicht in einer gewünschten Solllage Ls ausgerichtet ist. Die Symmetrieachse A ist gegenüber der Drehachse C bzw. der Z-Koordinatenachse ZM des Maschinenkoordinatensystems KM geneigt und/oder in der X-Y-Ebene des Maschinenkoordinatensystems KM verschoben. Die Lage der Symmetrieachse A kann daher allgemein durch einen Kippwinkel $\gamma$ und eine Verschiebung t in der X-Y-Ebene des Werkstückkoordinatensystems KW angegeben werden (Figuren 2 und 3). Es ist auch möglich, die Verschiebung t nicht nur in einer Ebene, sondern im Raum zu definieren (Verschiebung t* in Fig. 2), so dass die Verschiebung t* nicht nur eine X-Komponente $t_x$, eine Y-Komponente $t_y$, sondern zusätzlich noch eine Z-Komponente $t_z$ aufweist. Dadurch besteht die Möglichkeit, den Koordinatenursprung des Werkstückkoordinatensystems KW und den Koordinatenursprung des Maschinenkoordinatensystems KM in Übereinstimmung zu bringen. Die Justageanordnung 24 weist in diesem Fall eine translatorische Justageachse zur Bewegung des Werkstückträgers 23 in Z-Richtung auf. An dieser Stelle sei darauf hingewiesen, dass das Maschinenkoordinatensystem KM in Fig. 1 der Übersichtlichkeit wegen unterhalb des Werkstückträgers 23 eingezeichnet ist. Der Ursprung des Maschinenkoordinatensystems KM wäre im letztgenannten Fall oberhalb des Werkstückträgers 23 zu definieren. Er kann abhängig vom zu vermessenden Werkstück 16 an einer beliebigen Stelle entlang der Drehachse C durch eine entsprechende Initialisierung vorgegeben werden.

Der Kippwinkel $\gamma$ kann allgemein durch zwei Kippwinkelkomponenten $\alpha$, $\beta$ beschrieben werden. Die Kippwinkelkomponente um die X-Koordinatenachse XW wird daher als Kippwinkelkomponente $\alpha$ und die Kippwinkelkomponente um die Y-Koordinatenachse YW des Werkstückkoordinatensystems KW als Kippwinkelkomponente $\beta$ bezeichnet. Beide Kippwinkelkomponenten $\alpha$, $\beta$ ergeben zusammen den Kippwinkel $\gamma$ zwischen der Ausrichtung der Symmetrieachse A und einer Parallelen zur Drehachse C bzw. zur Z-Koordinatenachse ZM des Maschinenkoordinatensystems KM.

Die Verschiebung t ergibt sich durch eine Vektoraddition der Verschiebungskomponenten in die verschiedenen Raumrichtungen, beispielsgemäß durch eine Verschiebungskomponente $t_x$ entlang der X-Koordinatenachse XW und einer Verschiebungskomponente $t_y$ entlang der Y-Koordinatenachse YW des Werkstückkoordinatensystems KW.

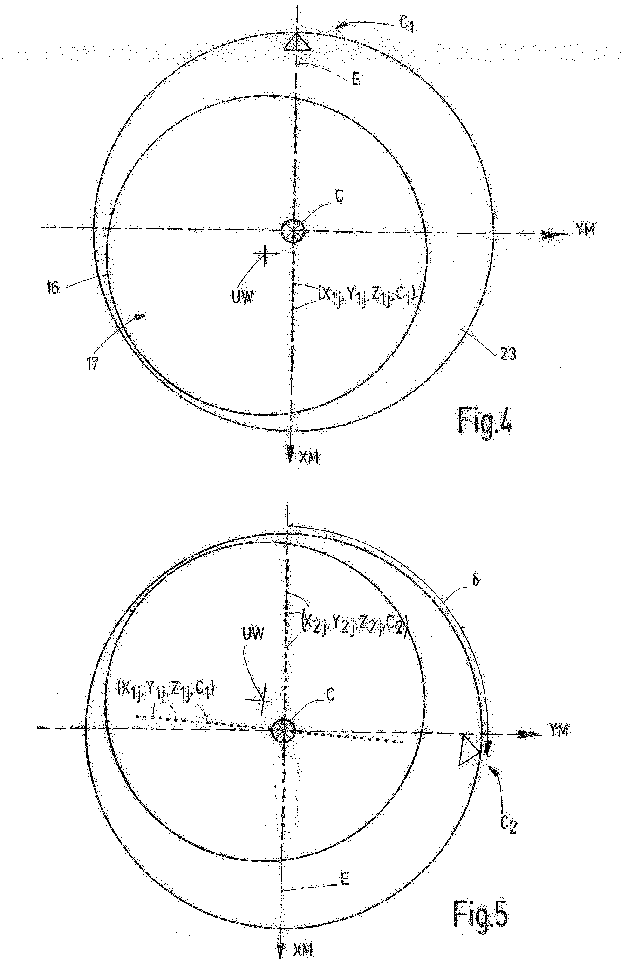

In den Figuren 3a bis 3c ist das Prinzip der Justage schematisch dargestellt. Das zunächst eine beliebige Istlage Li einnehmende Werkstück 16 wird über die Justageanordnung 24 beispielsgemäß den Kipptisch 25 zunächst um den Kippwinkel $\gamma$ gekippt, so dass die Symmetrieachse A parallel zur Drehachse C ausgerichtet ist (Figur 3b). Anschließend wird das Werkstück 16 um die Verschiebung t bewegt, so dass die Symmetrieachse A entlang der Drehachse C ausgerichtet ist und das Werkstück 16 die Solllage Ls einnimmt (Figur 3c). Um diese Justage vornehmen zu können, muss der Kippwinkel $\gamma$ und die Verschiebung t ermittelt werden. Das Verfahren zur Ermittlung dieser Parameter wird nachfolgend anhand der Figuren 4-9 erläutert.

In den Figuren 4 und 5 ist der Werkstückträger 23 und das darauf angeordnete Werkstück 16 stark vereinfacht in Draufsicht dargestellt. Der Koordinatenursprung UW des Werkstückkoordinatensystems KW ist eingetragen. Der Koordinatenursprung UW entspricht dem Zenit des Werkstücks 16 bzw. dem Durchstoßpunkt der Symmetrieachse A durch die obere Fläche 17. Die Drehachse C verläuft senkrecht zur Zeichenebene.

In einem ersten Schritt S1 wird der Werkstückträger 23 bzw. das Werkstück 16 in eine erste Drehlage $c_1$ gebracht bzw. die aktuelle Drehlage wird als erste Drehlage $c_1$ definiert. In dieser ersten Drehlage $c_1$ werden in dem ersten Schritt S1 mehrere Messpunkte in einer Messebene E aufgenommen. Die Messebene E ist beispielsgemäß durch die Maschinenkoordinatenachsen XM, ZM aufgespannt und mithin rechtwinklig zur Y-Koordinatenachse YM des Maschinenkoordinatensystems KM ausgerichtet. Die Drehachse C verläuft daher innerhalb der Messebene E. Alternativ hierzu könnte die Messebene E auch parallel und mit Abstand zur Drehachse C angeordnet sein. Die Sensoreinheit 15 nimmt in dieser ersten Drehlage $c_1$ auf der oberen Fläche 17 die Koordinaten mehrerer Messpunkte $x_{1j}$, $y_{1j}$, $z_{1j}$, $c_1$ auf.

In einem zweiten Schritt S2 wird der Werkstückträger 23 mit dem Werkstück 16 um einen Drehwinkel $\delta$ um die Drehachse C in eine zweite Drehlage $c_2$ gedreht. Der Drehwinkel $\delta$ beträgt beim Ausführungsbeispiel etwa 90° und kann um vorzugsweise maximal 5° von dem Solldrehwinkel abweichen. In dieser zweiten Drehlage $c_2$ werden Messpunkte $x_{2j}$, $y_{2j}$, $z_{2j}$, $c_2$ in derselben Messebene E bezüglich des Maschinenkoordinatensystems KM gemessen (Schritt S3).

Es werden mindestens zwei Messungen in zwei unterschiedlichen Drehlagen $c_1$, $c_2$ mit jeweils mehreren Messpunkten $x_{ij}$, $y_{ij}$, $z_{ij}$, $c_i$ aufgenommen. Der Index i = 1, 2, 3, ... gibt dabei die Nummer der Messwertfolge bei der Messung mehrerer Messpunkte in einer der Drehlagen an. Es können auch mehr als zwei Messungen in mehr als zwei verschiedenen Drehlagen durchgeführt werden. Der Index j = 1, 2, 3, ... gibt die Nummer des Messpunkts in einer Messwertfolge an. Die Anzahl der Messpunkte in der Messebene E entlang der oberen Fläche 17 wird in Abhängigkeit von der erforderlichen Genauigkeit gewählt.

Allgemein wird der Solldrehwinkel $\delta_{soll}$ zwischen zwei aufeinanderfolgenden Drehstellungen $c_i$ und $c_{1+1}$ wie folgt berechnet:

$$\delta_{soll} = \frac{180°}{M} \qquad (1)$$

wobei M die Anzahl der Messwertfolgen i= 1, 2, 3, ..., M in den verschiedenen Drehstellungen angibt. Bei Messungen in zwei unterschiedlichen Drehstellungen $c_i$, $c_2$ ist der Solldrehwinkel $\delta_{soll}$ daher gleich 90°. Je mehr Drehstellungen für jeweils eine Messwertfolge verwendet werden, desto weniger Iterationen werden zur Erzielung einer vorgegebenen Genauigkeit der Justage der Symmetrieachse A des Werkstücks 16 entlang der Drehachse C benötigt. Entsprechend kann bei einer vorgegebenen Anzahl von Iterationen durch eine größere Anzahl von Drehstellungen eine verbesserte Genauigkeit der Justage der Symmetrieachse A des Werkstücks 16 entlang der Drehachse C erreicht werden.

Die aufgenommenen Messpunkte $x_{ij}$, $y_{ij}$, $z_{ij}$, $c_i$ beschreiben die Istlage Li des Werkstücks 16. Die Sollgeometrie der Werkstückoberfläche 17 des gemessenen Werkstücks 16, beispielsweise eine asphärische Fläche, ist bekannt. Durch Einpassen der Messpunkte $x_{ij}$, $y_{ij}$, $z_{ij}$, $c_i$ in die bekannte Sollgeometrie kann daher die Istlage Li ermittelt werden. Die Abweichung der Istlage Li zur gewünschten Solllage Ls des Werkstücks 16 kann durch die Verschiebung t und den Kippwinkel $\gamma$ beschrieben werden. Wenn die Sollgeometrie für die obere Fläche 17 bzw. das Werkstück 16 gleichzeitig auch die Solllage definiert, kann durch Einpassen der Messpunkte in die Solllage Ls auch gleich die Verschiebung t und der Kippwinkel $\gamma$ ermittelt werden.

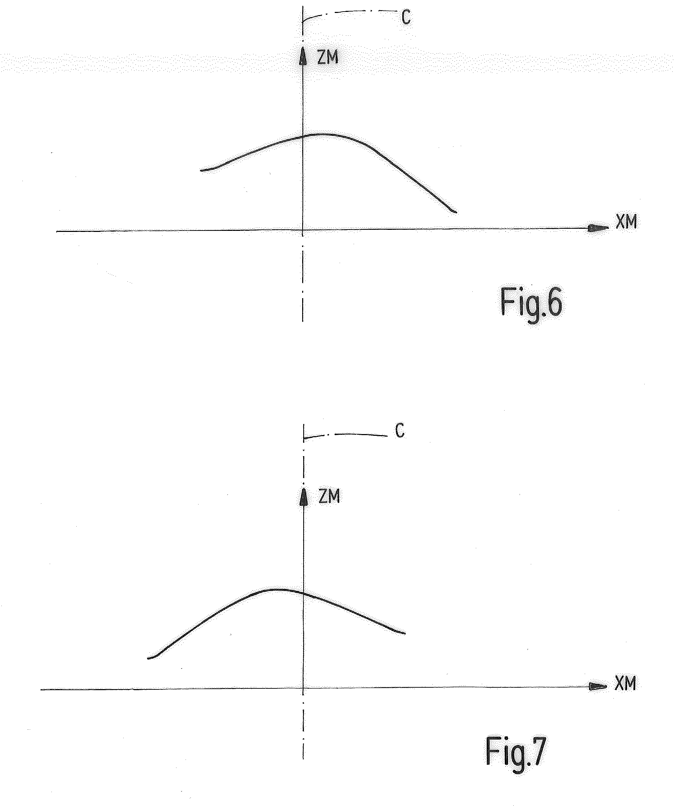

Die durch die Messpunkte $x_{ij}$, $y_{ij}$, $z_{ij}$, $c_i$ beschriebenen Z-Konturlinien entlang der X-Koordinatenachse XM des Maschinenkoordinatensystems KM sind qualitativ beispielhaft in den Figuren 6 und 7 veranschaulicht. Jede Messung in einer Drehlage $c_i$ beschreibt eine solche Konturlinie.

Jeder Messpunkt einer Messung lässt sich durch seine Koordinaten $x_{ij}$, $y_{ij}$, $z_{ij}$ im Raum des Maschinenkoordinatensystems KM sowie die Drehlage $c_i$ beschreiben, so dass sich ein Koordinatenquadrupel $x_{ij}$, $y_{ij}$, $z_{ij}$, $c_i$ ergibt. Wie erläutert bezeichnet der Index i die Nummer der Messwertfolge und der Index j die Nummer des Punktes einer Messwertfolge. Die Messpunkte werden beispielsgemäß zunächst von dem Maschinenkoordinatensystem KM in das Werkstückkoordinatensystem KW transformiert:

$$\begin{pmatrix} x_{i,j}^{KW} \\ y_{i,j}^{KW} \\ z_{i,j}^{KW} \end{pmatrix} = \begin{pmatrix} \cos(c_i) & -\sin(c_i) & 0 \\ \sin(c_i) & \cos(c_i) & 0 \\ 0 & 0 & 1 \end{pmatrix} * \begin{pmatrix} x_{i,j} \\ y_{i,j} \\ z_{i,j} \end{pmatrix} \qquad (2)$$

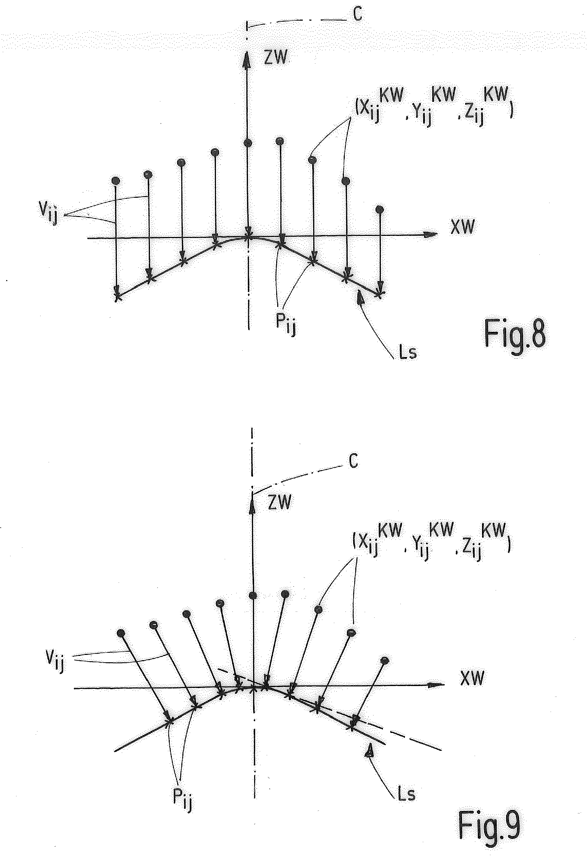

Die erhaltenen Messpunkte $x_{i,j}^{KW}$, $y_{i,j}^{KW}$, $z_{i,j}^{KW}$ werden in die bekannte Sollgeometrie unter Minimierung der Abweichung eingepasst. Zwei prinzipielle Möglichkeiten einer solchen Einpassung sind in den Figuren 8 und 9 stark schematisiert dargestellt. Den einzelnen Messpunkten $x_{i,j}^{KW}$, $y_{i,j}^{KW}$, $z_{i,j}^{KW}$ kann jeweils ein Zielpunkt $P_{ij}$ auf der oberen Fläche 17 des sich in Solllage Ls befindenden Werkstücks 16 mit bekannter Sollgeometrie der oberen Fläche 17 zugeordnet werden. Die Zuordnung kann beispielsweise für alle Messpunkte $x_{i,j}^{KW}$, $y_{i,j}^{KW}$, $z_{i,j}^{KW}$ entlang derselben Richtung erfolgen (Fig. 8), beispielsweise parallel zur Z-Koordinatenachse ZM, oder alternativ in Normalenrichtung (Fig. 9) zur oberen Fläche 17 des sich in Solllage Ls befindenden Werkstücks 16. Von jedem Messpunkt $x_{i,j}^{KW}$, $y_{i,j}^{KW}$, $z_{i,j}^{KW}$ zeigt ein Vektor $V_{ij}$ zu dem jeweils zugeordneten Zielpunkt $P_{ij}$ auf der oberen Fläche 17 des Werkstücks 16. Die Vektoren $V_{ij}$ stellen jeweils die Abweichung der Istlage Li zu der Solllage Ls dar und daraus können die gesuchten Justageparameter, nämlich der Kippwinkel $\gamma$ und die Verschiebung t ermittelt werden. Dabei werden die Justageparameter (Kippwinkel $\gamma$, Verschiebung t) so ermittelt, dass die Abweichung bei der Einpassung der Messpunkte $x_{i,j}^{KW}$, $y_{i,j}^{KW}$, $z_{i,j}^{KW}$ in die Sollgeometrie der oberen Fläche 17 möglichst klein ist. Hierzu kann ein geeignetes Qualitätsmaß definiert werden. Beispielsweise kann das Verfahren der kleinsten Fehlerquadrate oder ein anderes bekanntes mathematisches Verfahren eingesetzt werden, um das ermittelte Qualitätsmaß bzw. die Abweichung zu minimieren.

Nach der Ermittlung der Verschiebung t und des Kippwinkels $\gamma$ im vierten Schritt S4 wird die Justageanordnung 24 durch die Steuereinrichtung 21 angesteuert. Dabei werden zunächst die Kippachsen des Kipptisches 25 angesteuert, um eine entsprechende Kippung des Werkstücks 16 durchzuführen, um die Symmetrieachse A parallel zu der Drehachse C auszurichten. Anschließend werden die translatorischen Justageachsen 26 angesteuert, um die Symmetrieachse A des Werkstücks 16 auf die Drehachse C zu verschieben. Die Ansteuerung der Justageanordnung 24 hat das Ziel, die Istlage Li des Werkstücks 16 in Übereinstimmung mit der Solllage Ls zu bringen.

In einem sechsten Schritt S6 kann eine erneute Messung in einer oder mehreren Drehlagen durchgeführt und die Abweichung der Istlage Li von der Solllage Ls bewertet werden. Ist eine gewünschte Genauigkeit noch nicht erreicht, können aktuelle Werte für den Kippwinkel $\gamma$ und die Verschiebung t berechnet und die Justageanordnung 24 entsprechend der berechneten Parameter angesteuert werden. Dieser iterative Ablauf kann mehrfach solange wiederholt werden, bis vorgegebene Genauigkeit erreicht ist oder keine wesentliche Verbesserung der Genauigkeit durch weitere Iterationen erreicht werden kann.

Das vorstehend allgemein erläuterte Verfahren wird nachfolgend an einem Beispiel veranschaulicht. Als Qualitätsmaß wird hier die mittlere quadratische Abweichung minimiert, um die transformierten Messpunkte $x_{i,j}^{KW}$, $y_{i,j}^{KW}$, $z_{i,j}^{KW}$ in die Sollgeometrie bzw. die Solllage Ls einzupassen.

Das nominelle Design (Sollgeometrie) des zu messenden Werkstücks 16 bzw. der oberen Fläche 17 ist bekannt. Beispielsgemäß handelt es sich dabei um eine Asphäre. Der Höhenwert bzw. z-Wert $z_{asp}$ der Asphäre kann beispielweise mit folgender Asphärenformel angegeben werden:

$$z_{asp}(x^{KW}, y^{KW}) = z_{asp}(r^{KW}) = \frac{(r^{KW})^2 / R_0}{1 + \sqrt{1 - (1+k)\left(\frac{r^{KW}}{R_0}\right)^2}} + \sum_{n=2}^{N} A_{2n}(r^{KW})^{2n} \quad (3)$$

mit

$$r^{KW} = \sqrt{(x^{KW})^2 + (y^{KW})^2} \quad (4)$$

wobei $R_0$ der Grundradius der Asphäre, k die konische Konstante und $A_{2n}$ die Asphärenkoeffizienten sind. Bei der Gleichung (3) befindet sich der Ursprung des Werkstückkoordinatensystems KW im Zenit der Asphäre.

Die in das Werkstückkoordinatensystem KW transformierten Messpunkte werden so in die durch die Gleichung (3) gegebene Sollgeometrie (nominelles Asphärendesign) eingepasst, dass die mittlere quadratische Abweichung zwischen der z-Koordinate der eingepassten Punkte und dem z-Wert $z_{asp}$ der Sollgeometrie an den zugeordneten Stellen x, y der eingepassten Messpunkte minimal ist. Dazu werden beispielsgemäß zwei Rotations- oder Kippparameter (Kipp-

winkelkomponenten $\alpha$, $\beta$) und zwei oder drei Translationsparameter (Verschiebungskomponenten $t_x$, $t_y$ und optional $t_z$) ermittelt, so dass der folgende Ausdruck minimal ist:

$$\sum_{i=1}^{M} \sum_{j=1}^{J_i} \left( \tilde{z}_{i,j}^{KW} - z_{asp}\left(\tilde{x}_{i,j}^{KW}, \tilde{y}_{i,j}^{KW}\right) \right)^2 \qquad (5)$$

Dabei werden $\tilde{x}_{i,j}^{KW}$, $\tilde{y}_{i,j}^{KW}$ und $\tilde{z}_{i,j}^{KW}$ berechnet mittels

$$\begin{pmatrix} \tilde{x}_{i,j}^{KW} \\ \tilde{y}_{i,j}^{KW} \\ \tilde{z}_{i,j}^{KW} \end{pmatrix} = \begin{pmatrix} 1 & 0 & 0 \\ 0 & \cos(\alpha) & -\sin(\alpha) \\ 0 & \sin(\alpha) & \cos(\alpha) \end{pmatrix} * \begin{pmatrix} \cos(\beta) & 0 & \sin(\beta) \\ 0 & 1 & 0 \\ -\sin(\beta) & 0 & \cos(\beta) \end{pmatrix} \begin{pmatrix} x_{i,j}^{KW} \\ y_{i,j}^{KW} \\ z_{i,j}^{KW} \end{pmatrix} + \begin{pmatrix} t_x \\ t_y \\ t_z \end{pmatrix} (6)$$

Da beispielsgemäß die Sollgeometrie den Koordinatenursprung des Werkstückkoordinatensystems KW am Zenit der Asphäre hat und im Maschinenkoordinatensystem KM die Drehachse C durch den Koordinatenursprung des Maschinenkoordinatensystems KM verläuft, stellen die Verschiebungskomponenten $t_x$ in X-Richtung des Werkstückkoordinatensystems KW und $t_y$ in Y-Richtung des Werkstückkoordinatensystems KW die Verschiebung der Symmetrieachse A des Werkstücks 16 rechtwinklig zur Drehachse C dar und die Kippwinkelkomponenten $\alpha$ um die X-Richtung des Werkstückkoordinatensystems KW und $\beta$ um die Y-Richtung des Werkstückkoordinatensystems KW bilden den Kippwinkel $\gamma$ zwischen der Symmetrieachse A und der Drehachse C.

Nach der Bestimmung der Verschiebung t und des Kippwinkels $\gamma$ kann die Justageanordnung 24 entsprechend angesteuert werden, um die Istlage Li in Übereinstimmung zu bringen mit der Solllage Ls. Wie erläutert kann das Verfahren iterativ wiederholt werden, um die Genauigkeit zu erhöhen.

Bei den vorstehenden Ausführungsbeispielen wurde die Anordnung der Justageachsen der Justageanordnung 24 als bekannt vorausgesetzt. Wie in Figur 3a schematisch veranschaulicht ist, wird das Werkstück 16 mittels des Kipptisches 25 um eine Kippstelle KS geschwenkt, die mit Abstand zum Werkstück 16 angeordnet ist. Wenn dieser Abstand nicht exakt bekannt ist, kann das vorstehend beschriebene Verfahren wie nachfolgend beschrieben modifiziert werden.

Nach der Ermittlung eines ersten Wertes für den Kippwinkel $\gamma$ (im vierten Schritt S4) kann zunächst der Kipptisch 25 angesteuert werden, um dem Werkstückträger 23 entsprechend des ermittelten Kippwinkels $\gamma$ zu bewegen.

Anschließend wird der Werkstückträger 23 z.B. wieder in die erste Drehlage $c_1$ gebracht und eine erneute Messung einer Messwertfolge in der Messebene E vorgenommen. Dann wird der Werkstückträger 23 gedreht, beispielsweise in die zweite Drehlage $c_2$, und es wird wiederum eine Messung einer Messwertfolge in der Messebene E vorgenommen. Nach diesen beiden Messungen der Messwertfolgen wird erneut ein aktueller Wert für den Kippwinkel und die Verschiebung aus den aktuellen Messungen berechnet. Da nach einem Kippen des Werkstückträgers 23 und der erneuten Messung bekannt ist, wie sich die Kipplage des Werkstückträgers 23 bzw. des Werkstücks 16 verändert hat, kann nunmehr auf Basis der aktuellen Messungen und des ermittelten aktuellen Kippwinkels sowie der ermittelten aktuellen Verschiebung die Justageanordnung 24 angesteuert werden, um die Istlage Li mit der Solllage Ls in Übereinstimmung zu bringen. Es versteht sich auch bei diesem Verfahren, dass in wenigstens zwei Drehlagen jeweils eine Messung erfolgt, Messungen aber auch in mehr als zwei Drehlagen durchgeführt werden können, wie es im Zusammenhang mit anderen Ausführungsbeispielen bereits erläutert wurde.

Die Erfindung betrifft ein Verfahren und ein Messgerät 15, das zur Justage einer Lage eines Werkstücks 16 mit einer gekrümmt verlaufenden oberen Fläche 17 in Bezug auf eine Drehachse C des Messgerätes 15 eingerichtet ist. Das Werkstück 16 wird mit einem Werkstückträger 23 in eine erste Drehlage $c_1$ gebracht. Innerhalb einer Messebene wird eine Mehrzahl von Messpunkten auf der oberen Fläche 17 aufgenommen. Das Werkstück 16 wird in eine weitere Drehlage $c_2$ um die Drehachse C gebracht, und es werden erneut Messpunkte in der Messebene E auf der oberen Fläche 17 des Werkstücks 16 aufgenommen. Aus den aufgenommenen Messpunkten kann die Istlage Li des Werkstücks 16 sowie die Abweichung von der vorgegebenen Solllage Ls ermittelt werden. In der Solllage Ls wird die Symmetrieachse A des Werkstücks 16 in Übereinstimmung mit der Drehachse C gebracht. Hierfür werden Justageparameter, beispielsgemäß ein Kippwinkel $\gamma$ und eine Verschiebung t ermittelt und eine Justageanordnung 24 des Messgerätes 15 abhängig von den berechneten Justageparametern angesteuert, um das Werkstück 16 zu justieren.

Bezugszeichenliste:

| | |
|---|---|
| 15 | Messgerät |
| 16 | Werkstück |
| 17 | obere Fläche des Werkstücks |
| 18 | Sensoreinheit |
| 19 | Maschinenachsanordnung |
| 20 | Sensor |
| 21 | Steuereinrichtung |
| 22 | rotative Maschinenachse |
| 23 | Werkstückträger |
| 24 | Justageanordnung |
| 25 | Kipptisch |
| 26 | translatorische Justageachse |

| | |
|---|---|
| $\alpha$ | Kippwinkelkomponente um die x-Richtung des Werkstückkoordinatensystems |
| $\beta$ | Kippwinkelkomponente um die y-Richtung des Werkstückkoordinatensystems |
| $\gamma$ | Kippwinkel |
| $\delta$ | Drehwinkel |
| $\delta_{soll}$ | Solldrehwinkel |
| A | Symmetrieachse des Werkstücks |
| C | Drehachse |
| $c_i$ | Drehlage des Werkstücks um die Drehachse im Maschinenkoordinatensystems KM |
| KM | Maschinenkoordinatensystem |
| KW | Werkstückkoordinatensystem |
| KS | Kippstelle |
| Li | Istlage |
| Ls | Solllage |
| $P_{ij}$ | Zielpunkt |
| t | Verschiebung |
| $t_x$ | Verschiebungskomponente in x-Richtung des Werkstückkoordinatensystems |
| $t_y$ | Verschiebungskomponente in y-Richtung des Werkstückkoordinatensystems |
| $t_z$ | Verschiebungskomponente in z-Richtung des Werkstückkoordinatensystems |
| UW | Koordinatenursprung des Werkstückkoordinatensystems |
| $V_{ij}$ | Vektor |
| $x_{ij}$ | x-Koordinate eines Messpunkts im Maschinenkoordinatensystems |
| $x_{i,j}^{KW}$ | x-Koordinate eines Messpunkts im Werkstückkoordinatensystem |
| XM | X-Koordinatenachse des Maschinenkoordinatensystems |
| XW | X-Koordinatenachse des Werkstückkoordinatensystems |
| $y_{ij}$ | y-Koordinate eines Messpunkts im Maschinenkoordinatensystems |
| $y_{i,j}^{KW}$ | y-Koordinate eines Messpunkts im Werkstückkoordinatensystem |
| YM | Y-Koordinatenachse des Maschinenkoordinatensystems |
| YW | Y-Koordinatenachse des Werkstückkoordinatensystems |
| $z_{ij}$ | z-Koordinate eines Messpunkts im Maschinenkoordinatensystems |
| $z_{i,j}^{KW}$ | z-Koordinate eines Messpunkts im Werkstückkoordinatensystem |
| ZM | Z-Koordinatenachse des Maschinenkoordinatensystems |
| ZW | Z-Koordinatenachse des Werkstückkoordinatensystems |

**Patentansprüche**

1. Verfahren zur Justage der Lage eines bezüglich einer Symmetrieachse (A) rotationssymmetrischen Werkstücks (16) mit einer gekrümmten oberen Fläche (17) in einem Messgerät (15), das einen um eine Drehachse (C) antreibbaren Werkstückträger (23) aufweist, der über eine Justageanordnung (24) gegenüber der Drehachse (C) kippbar und rechtwinkelig zur Drehachse (C) in zwei Raumrichtungen bewegbar ist, wobei das Messgerät (15) eine Sensoreinheit (18) zum Messen von Messpunkten ($x_{ij}$, $y_{ij}$, $z_{ij}$, $c_i$) in einem Maschinenkoordinatensystem (KM) des Messgeräts (15) auf der gekrümmten oberen Fläche (17) des Werkstücks (16) aufweist, mit folgenden Schritten:

- S1: Messen von mehreren Messpunkten ($x_{1j}$, $y_{1j}$, $z_{1j}$, $c_1$) in einer Messebene (E) des Maschinenkoordinatensystem (KM) auf der oberen Fläche (17) des Werkstücks (16) in einer ersten Drehlage ($c_1$) des Werkstücks (16) um die Drehachse (C),
- S2: Drehen des Werkstückträgers (23) mit dem Werkstück (16) um einen Drehwinkel ($\delta$) um die Drehachse (C) in eine zweite Drehlage ($c_2$),
- S3: Messen von mehreren Messpunkten ($x_{2j}$, $y_{2j}$, $z_{2j}$, $c_2$) in derselben Messebene (E) im Maschinenkoordinatensystem (KM) auf der oberen Fläche (17) des Werkstücks (16) in der zweiten Drehlage ($c_2$) des Werkstücks (16),
- S4: Ermitteln eines Kippwinkels ($\gamma$) und einer Verschiebung (t), aus einer durch die gemessenen Messpunkte ($x_{ij}$, $y_{ij}$, $z_{ij}$, $c_i$) beschriebenen Istlage (Li) des Werkstücks (16) in eine Solllage (Ls) des Werkstücks (16), wobei die Messpunkte ($x_{ij}$, $y_{ij}$, $z_{ij}$, $c_i$) zum Ermitteln des Kippwinkels ($\gamma$) und der Verschiebung (t) zunächst in Messpunkte

$$( x_{i,j}^{KW},\ y_{i,j}^{KW},\ z_{i,j}^{KW} )$$ in ein Werkstückkoordinatensystem (KW) des Werkstücks (16) umgerechnet werden, und wobei die Messpunkte $( x_{i,j}^{KW},\ y_{i,j}^{KW},\ z_{i,j}^{KW} )$ im Werkstückkoordinatensystem (KW) zum Ermitteln des Kippwinkels ($\gamma$) und der Verschiebung (t) derart in eine bekannte Sollgeometrie der oberen Fläche (17) des Werkstücks (16) eingepasst werden, dass die Abweichung zwischen der durch die Messpunkte

$( x_{i,j}^{KW},\ y_{i,j}^{KW},\ z_{i,j}^{KW} )$ beschriebenen gemessenen Geometrie und der Sollgeometrie minimal ist,
- S5: Ansteuern der Justageanordnung (24) abhängig vom Kippwinkel ($\gamma$) und der Verschiebung (t), um die Istlage (Li) mit der Solllage (Ls) in Übereinstimmung zu bringen.

2.  Verfahren nach Anspruch 1,
    **dadurch gekennzeichnet, dass** das Maschinenkoordinatensystem (KM) eine Koordinatenachse (ZM) parallel zu der Drehachse (C) und zwei Koordinatenachsen (XM, YM) rechtwinkelig zu der Drehachse (C) aufweist.

3.  Verfahren nach Anspruch 2,
    **dadurch gekennzeichnet, dass** der ermittelte Kippwinkel ($\gamma$) jeweils eine Kippwinkelkomponente ($\alpha$, $\beta$) um eine von den beiden Koordinatenachsen (XW, YW) des Werkstückkoordinatensystems (KW) aufweist.

4.  Verfahren nach Anspruch 2 oder 3,
    **dadurch gekennzeichnet, dass** die ermittelte Verschiebung (t) jeweils eine Verschiebungskomponente ($t_x$, $t_y$) in Richtung einer von den beiden Koordinatenachsen (XW, YW) des Werkstückkoordinatensystems (KW) aufweist.

5.  Verfahren nach Anspruch 4,
    **dadurch gekennzeichnet, dass** die ermittelte Verschiebung (t) jeweils eine Verschiebungskomponente ($t_z$) in Richtung der Koordinatenachse (ZW) des Werkstückkoordinatensystems (KW) aufweist, die parallel zur Drehachse (C) ausgerichtet ist.

6.  Verfahren nach einem der vorhergehenden Ansprüche,
    **dadurch gekennzeichnet, dass** im Anschluss an den Schritt S5 in einem Schritt S6 die Übereinstimmung der Istlage (Li) mit der Solllage (Ls) geprüft wird.

7.  Verfahren nach Anspruch 6,
    **dadurch gekennzeichnet, dass** dann, wenn im Schritt S6 festgestellt wurde, dass die Istlage (Li) und die Solllage (Ls) nicht mit einer vorgegeben Genauigkeit übereinstimmen, die Schritte S1 bis S6 wiederholt werden.

8.  Verfahren nach einem der vorhergehenden Ansprüche, **dadurch gekennzeichnet, dass** die Sollgeometrie des Werkstücks (16) so vorgegeben ist, dass sie gleichzeitig die Solllage (Ls) beschreibt.

9.  Verfahren nach Anspruch 8,

    **dadurch gekennzeichnet, dass** jeder Messpunkt $( x_{i,j}^{KW},\ y_{i,j}^{KW},\ z_{i,j}^{KW} )$ jeweils einem Zielpunkt ($P_{1j}$, $P_{2j}$) der

Sollgeometrie zugeordnet wird und abhängig von den Vektoren ($V_{ij}$) von jedem Messpunkt $(x_{i,j}^{KW},\ y_{i,j}^{KW},\ z_{i,j}^{KW})$ zu dem zugeordnet Zielpunkt ($P_{1j}$, $P_{2j}$) der Kippwinkel ($\gamma$) und die Verschiebung ($t$) derart ermittelt werden, dass die Abweichung zwischen der gemessenen Geometrie und der Sollgeometrie minimal ist.

**10.** Verfahren nach einem der vorhergehenden Ansprüche,
**dadurch gekennzeichnet, dass** der Koordinatenursprung des Werkstückkoordinatensystems (KW) auf der Symmetrieachse (A) des rotationssymmetrischen Werkstücks (16) und auf der oberen Fläche (17) liegt.

**11.** Verfahren nach einem der vorhergehenden Ansprüche,
**dadurch gekennzeichnet, dass** die Schritte S2 und S3 M mal ausgeführt werden, wobei M eine natürliche Zahl ungleich Null ist, so dass Messpunkte ($x_{ij}$, $y_{ij}$, $z_{ij}$, $c_i$) in wenigstens zwei Drehlagen ($c_1$, $c_2$) gemessen werden, wobei ein Solldrehwinkel ($\delta_{soll}$) gleich 180° geteilt durch M ist.

**12.** Verfahren nach Anspruch 11,
**dadurch gekennzeichnet, dass** der eingestellte Drehwinkel ($\delta$) von dem Solldrehwinkel ($\delta_{soll}$) um betragsmäßig maximal 5° oder 10° abweichen kann.

**13.** Verfahren nach Anspruch 7 und nach Anspruch 11 oder 12,
**dadurch gekennzeichnet, dass** bei einer vorgegebenen Anzahl von Wiederholungen durch eine größere Anzahl M von Drehstellungen ($c_i$) eine verbesserte Genauigkeit der Justage der Symmetrieachse (A) des Werkstücks (16) entlang der Drehachse (C) erreicht wird.

**14.** Verfahren nach Anspruch 7 und nach einem der Ansprüche 11 bis 13,
**dadurch gekennzeichnet, dass** je größer die Anzahl M der Drehstellungen ($c_i$) ist, für die jeweils eine Messwertfolge von Messpunkten ($x_{ij}$, $y_{ij}$, $z_{ij}$, $c_i$) gemessen wird, desto weniger Wiederholungen werden zur Erzielung einer vorgegebenen Genauigkeit der Justage der Symmetrieachse (A) des Werkstücks (16) entlang der Drehachse (C) benötigt.

**15.** Verfahren nach einem der vorhergehenden Ansprüche, **dadurch gekennzeichnet, dass** dann, wenn die Lage von Justageachsen (25, 26) der Justageanordnung (24) nicht mit ausreichender Genauigkeit bekannt ist, der Schritt S5 wie folgt ausgeführt wird:

- S5a: Ansteuerung der Justageeinheit (24) zum Kippen des Werkstücks (16) abhängig vom Kippwinkel ($\gamma$),
- S5b: Drehen des Werkstückträgers (23) mit dem Werkstück (16) in eine Drehlage ($c_i$) und Messen von mehreren Messpunkten ($x_{ij}$, $y_{ij}$, $z_{ij}$, $c_i$) in der Messebene (E) des Maschinenkoordinatensystem (KM) auf der oberen Fläche (17) des Werkstücks (16) in dieser Drehlage ($c_i$),
- S5c: Drehen des Werkstückträgers (23) mit dem Werkstück (16) in eine andere Drehlage ($c_{i+1}$) und Messen von mehreren Messpunkten ($x_{i+1,j}$, $y_{i+1,j}$, $z_{i+1,j}$, $c_{i+1}$) in der Messebene (E) des Maschinenkoordinatensystem (KM) auf der oberen Fläche (17) des Werkstücks (16) in dieser Drehlage ($c_{i+1}$),
- S5d: Ermitteln jeweils eines aktuellen Werts des Kippwinkels und der Verschiebung aus der durch die gemessenen Messpunkte (($x_{ij}$, $y_{ij}$, $z_{ij}$, $c_i$); ($x_{i+1,j}$, $y_{i+1j}$, $z_{i+1,j}$, $c_{i+1}$)) beschriebenen Istlage (Li) des Werkstücks (16) in die Solllage (Ls) des Werkstücks (Ls), wobei die Messpunkte (($x_{ij}$, $y_{ij}$, $z_{ij}$, $c_i$) ; ($x_{i+1,j}$, $y_{i+1,j}$, $z_{i+1,j}$, $c_{i+1}$)) der Schritte S5c und S5d verwendet werden,
- S5e: Ansteuern der Justageanordnung (24) zumindest abhängig vom Kippwinkel ($\gamma$) aus dem Schritt S5d, um die Istlage (Li) mit der Solllage (Ls) in Übereinstimmung zu bringen.

**16.** Messgerät (15), das zur Ausrichtung eines bezüglich einer Symmetrieachse (A) rotationssymmetrischen Werkstücks (16) mit einer gekrümmten oberen Fläche (17) eingerichtet ist,
mit einem um eine Drehachse (C) antreibbaren Werkstückträger (23), der über eine Justageanordnung (24) gegenüber der Drehachse (C) kippbar und rechtwinkelig zur Drehachse (C) in zwei Raumrichtungen bewegbar ist,
mit einer Sensoreinheit (18) zum Messen von Messpunkten ($x_{ij}$, $y_{ij}$, $z_{ij}$, $c_i$) in einem Maschinenkoordinatensystem (KM) des Messgeräts (15) auf der gekrümmten oberen Fläche (17) des Werkstücks (16),
und mit Steuereinrichtung (21), die dazu eingerichtet ist folgende Schritte auszuführen:

- S1: Messen von mehreren Messpunkten ($x_{1j}$, $y_{1j}$, $z_{1j}$, $c_1$) in einer Messebene (E) des Maschinenkoordinatensystem (KM) auf der oberen Fläche (17) des Werkstücks (16) in einer ersten Drehlage ($c_1$) des Werkstücks (16),
- S2: Drehen des Werkstückträgers (23) mit dem Werkstück (16) um einen Drehwinkel ($\delta$) in eine zweite Drehlage

(c$_2$),

- S3: Messen von mehreren Messpunkten (x$_{2j}$, y$_{2j}$, z$_{2j}$, c$_2$) in derselben Messebene (E) im Maschinenkoordinatensystem (KM) auf der oberen Fläche (17) des Werkstücks (16) in der zweiten Drehlage (c$_2$) des Werkstücks (16),

- S4: Ermitteln eines Kippwinkels ($\gamma$) und einer Verschiebung (t), aus einer durch die gemessenen Messpunkte (x$_{ij}$, y$_{ij}$, z$_{ij}$, c$_i$) beschriebenen Istlage (Li) des Werkstücks (16) in eine Solllage (Ls) des Werkstücks (16), wobei die Messpunkte (x$_{ij}$, y$_{ij}$, z$_{ij}$, c$_i$) zum Ermitteln des Kippwinkels ($\gamma$) und der Verschiebung (t) zunächst in Messpunkte

$( x_{i,j}^{KW},\ y_{i,j}^{KW},\ z_{i,j}^{KW} )$ in ein Werkstückkoordinatensystem (KW) des Werkstücks (16) umgerechnet werden, und wobei die Messpunkte $( x_{i,j}^{KW},\ y_{i,j}^{KW},\ z_{i,j}^{KW} )$ zum Ermitteln des Kippwinkels ($\gamma$) und der Verschiebung

(t) derart in eine bekannte Sollgeometrie der oberen Fläche (17) des Werkstücks (16) eingepasst werden, dass die Abweichung zwischen der durch die Messpunkte $( x_{i,j}^{KW},\ y_{i,j}^{KW},\ z_{i,j}^{KW} )$ beschriebenen gemessenen

Geometrie und der Sollgeometrie minimal ist,

- S5: Ansteuern der Justageanordnung (24) abhängig vom Kippwinkel ($\gamma$) und der Verschiebung (t), um die Istlage (Li) mit der Solllage (Ls) in Übereinstimmung zu bringen.

## Claims

1. Method for adjusting the position of a workpiece (16) which is rotationally symmetrical relative to an axis of symmetry (A) and has a curved upper surface (15), in a measuring device (15) having a workpiece carrier (23) which can be driven about a rotational axis (C), tilted relative to the rotational axis (C) via an adjustment arrangement (24) and moved in two spatial directions perpendicularly to the rotational axis (C), wherein the measuring device (15) comprises a sensor unit (18) for measuring, in a machine coordinate system (KM) of the measuring device (15), measurement points (x$_{ij}$, y$_{ij}$, z$_{ij}$, c$_i$) on the curved upper surface (17) of the workpiece (16), with the following steps:

- S1: measurement, in a measurement plane (E) of the machine coordinate system (KM), of several measurement points (x$_{1j}$, y$_{1j}$, z$_{1j}$, c$_1$) on the upper surface (17) of the workpiece (16) in a first rotational position (c$_1$) of the workpiece (16) about the rotational axis (C);
- S2: rotation of the workpiece carrier (23) with the workpiece (16) through a rotational angle ($\delta$) about the rotational axis (C) into a second rotational position (c$_2$),
- S3: measurement, in the same measurement plane (E) of the machine coordinate system (KM), of several measurement points (x$_{2j}$, y$_{2j}$, z$_{2j}$, c$_2$) on the upper surface (17) of the workpiece (16) in the second rotational position (c$_2$) of the workpiece (16);
- S4: determination of a tilt angle ($\gamma$) and a shift (t) from an actual position (Li) of the workpiece (16), described by the measured measurement points (x$_{ij}$, y$_{ij}$, z$_{ij}$, c$_1$), into a nominal position (Ls) of the workpiece (16), wherein for determining the tilt angle ($\gamma$) and the shift (t), the measurement points (x$_{ij}$, y$_{ij}$, z$_{ij}$, c$_i$) are firstly converted into measurement points (x$_{i,j}$$^{KW}$, y$_{i,j}$$^{KW}$, z$_{i,j}$$^{KW}$) in a workpiece coordinate system (KW) of the workpiece (16), wherein for determining the tilt angle ($\gamma$) and the shift (t), the measurement points (x$_{i,j}$$^{KW}$, y$_{i,j}$$^{KW}$, z$_{i,j}$$^{KW}$) in the workpiece coordinate system (KW) are fitted into a known nominal geometry of the upper surface (17) of the workpiece (16) such that the deviation between the measured geometry described by the measurement points (x$_{i,j}$$^{KW}$, y$_{i,j}$$^{KW}$, z$_{i,j}$$^{KW}$) and the nominal geometry is minimal,
- S5: actuating the adjustment arrangement (24) depending on the tilt angle ($\gamma$) and the shift (t) in order to bring the actual position (Li) into correlation with the nominal position (Ls).

2. Method according to claim 1, **characterised in that** machine coordinate system (KM) has a coordinate axis (ZM) parallel to the rotational axis (C), and two coordinate axes (XM, YM) perpendicular to the rotational axis (C).

3. Method according to claim 2, **characterised in that** the determined tilt angle ($\gamma$) in each case comprises a tilt angle component ($\alpha$, $\beta$) about one of the two coordinate axes (XW, YW) of the workpiece coordinate system (KW).

4. Method according to claim 2 or 3, **characterised in that** the determined shift (t) in each case comprises a shift component (t$_x$, t$_y$) in the direction of one of the two coordinate axes (XW, YW) of the workpiece coordinate system (KW).

5. Method according to claim 4, **characterised in that** the determined shift (t) in each case has a shift component ($t_z$) in the direction of the coordinate axis (ZW) of the workpiece coordinate system (KW) which is oriented parallel to the rotational axis (C).

6. Method according to any of the preceding claims, **characterised in that** following step S5, in a step S6 the correlation of the actual position (Li) with the nominal position (Ls) is checked.

7. Method according to claim 6, **characterised in that**, if it is found in step S6 that the actual position (Li) and the nominal position (Ls) do not correlate with a predefined accuracy, steps S1 to S6 are repeated.

8. Method according to any of the preceding claims, **characterised in that** the nominal geometry of the workpiece (16) is predefined such that it simultaneously describes the nominal position (Ls).

9. Method according to claim , **characterised in that** each measurement point ($x_{i,j}^{KW}$, $y_{i,j}^{KW}$, $z_{i,j}^{KW}$) is assigned to a respective target point ($P_{1j}$, $P_{2j}$) of the nominal geometry, and depending on the vectors ($V_{ij}$) of each measurement point ($x_{i,j}^{KW}$, $y_{i,j}^{KW}$, $z_{i,j}^{KW}$) to the assigned target point ($P_{1j}$, $P_{2j}$), the tilt angle ($\gamma$) and the shift (t) are determined such that the deviation between the measured geometry and the nominal geometry is minimal.

10. Method according to any of the preceding claims, **characterised in that** the coordinate origin of the workpiece coordinate system (KW) lies on the axis of symmetry (A) of the rotationally symmetrical workpiece (16) and on the upper surface (17).

11. Method according to any of the preceding claims, **characterised in that** the steps S2 and S3 are carried out M times, wherein M is a non-negative integer not equal to zero, so that measurement points ($x_{ij}$, $y_{ij}$, $z_{ij}$, $c_i$) are measured in at least two rotational positions ($c_1$, $c_2$), wherein a nominal rotation angle ($\delta_{soll}$) is equal to 180° divided by M.

12. Method according to claim 11, **characterised in that** the set rotational angle ($\delta$) may deviate from the nominal rotational angle ($\delta_{soll}$) by maximum 5° or 10° in amount.

13. Method according to claim 7 and claim 11 or 12, **characterised in that** for a predefined number of repetitions, a larger number M of rotational positions ($c_i$) achieves an improved precision of adjustment of the axis of symmetry (A) of the workpiece (16) along the rotational axis (C).

14. Method according to claim 7 and any of claims 11 to 13, **characterised in that** the larger the number M of rotational positions ($c_i$) for which a measured value sequence of measurement points ($x_{ij}$, $y_{ij}$, $z_{ij}$, $c_i$) is measured, the fewer repetitions are required to achieve a predefined precision of adjustment of the axis of symmetry (A) of the workpiece (16) along the rotational axis (C).

15. Method according to any of the preceding claims, **characterised in that** if the position of adjustment axes (25, 26) of the adjustment arrangement (24) is not known with sufficient accuracy, step S5 is performed as follows:

    - S5a: actuation of the adjustment unit (24) for tilting the workpiece (16) depending on tilt angle ($\gamma$),
    - S5b: rotation of the workpiece carrier (23) with the workpiece (16) into a rotational position ($C_i$) and measurement, in the measurement plane (E) of the machine coordinate system (KM), of several measurement points ($x_{ij}$, $y_{ij}$, $z_{ij}$, $c_i$) on the upper surface (17) of the workpiece (16) in this rotational position ($c_i$),
    - S5c: rotation of the workpiece carrier (23) with the workpiece (16) into another rotational position ($c_{i+1}$) and measurement, in the measurement plane (E) of the machine coordinate system (KM), of several measurement points ($x_{i+1,j}$, $y_{i+1,j}$, $z_{i+1,j}$, $c_{i+1}$) on the upper surface (17) of the workpiece (16) in this rotational position (ci+i),
    - S5d: determination of a respective current value of the tilt angle and shift from the actual position (Li) of the workpiece (16), described by the measured measurement points (($x_{i,j}$, $y_{i,j}$, $z_{i,j}$, $c_i$); ($x_{i+1,j}$, $y_{i+1,j}$, $z_{i+1,j}$, $c_{i+1}$)), into the nominal position (Ls) of the workpiece (16), wherein the measurement points (($x_{i,j}$, $y_{i,j}$, $z_{ij}$, $c_i$); ($x_{i+1,j}$, $y_{i+1,j}$, $z_{i+1,j}$, $c_{i+1}$)) of steps S5c and S5d are used,
    - S5e: actuation of the adjustment arrangement (24) at least depending on the tilt angle ($\gamma$) from step S5d, in order to bring the actual position (Li) into correlation with the nominal position (Ls).

16. Measuring device (15) which is configured to align a workpiece (16) which is rotationally symmetrical relative to an axis of symmetry (A) and has a curved upper surface (17),
    with a workpiece carrier (23) which can be driven about a rotational axis (C), tilted relative to the rotational axis (C) via an adjustment arrangement (24) and moved in two spatial directions perpendicularly to the rotational axis (C), with a sensor unit (18) for measuring, in a machine coordinate system (KM) of the measuring device (15), measurement points $(x_{ij}, y_{ij}, z_{ij}, c_i)$ on the curved upper surface (17) of the workpiece (16), and with a control device (21) which is configured to perform the following steps:

- S1: measurement, in a measurement plane (E) of the machine coordinate system (KM), of several measurement points $(x_{ij}, y_{1j}, z_{1j}, c_1)$ on the upper surface (17) of the workpiece (16) in a first rotational position $(c_1)$ of the workpiece (16);
- S2: rotation of the workpiece carrier (23) with the workpiece (16) through a rotational angle $(\delta)$ into a second rotational position $(c_2)$,
- S3: measurement, in the same measurement plane (E) of the machine coordinate system (KM), of several measurement points $(x_{2j}, y_{2j}, z_{2j}, c_2)$ on the upper surface (17) of the workpiece (16) in the second rotational position $(c_2)$ of the workpiece (16);
- S4: determination of a tilt angle $(\gamma)$ and a shift (t) from an actual position (Li) of the workpiece (16), described by the measured measurement points $(x_{ij}, y_{ij}, z_{ij}, c_1)$, into a nominal position (Ls) of the workpiece (16), wherein for determining the tilt angle $(\gamma)$ and the shift (t), the measurement points $(x_{ij}, y_{ij}, z_{ij}, c_i)$ are firstly converted into measurement points $(x_{i,j}^{KW}, y_{i,j}^{KW}, z_{i,j}^{KW})$ in a workpiece coordinate system (KW) of the workpiece (16), and wherein for determining the tilt angle $(\gamma)$ and the shift (t), the measurement points $(x_{i,j}^{KW}, y_{i,j}^{KW}, z_{i,j}^{KW})$ in the workpiece coordinate system (KW) are fitted into a known nominal geometry of the upper surface (17) of the workpiece (16) such that the deviation between the measured geometry described by the measurement points $(x_{i,j}^{KW}, y_{i,j}^{KW}, z_{i,j}^{KW})$ and the nominal geometry is minimal,
- S5: actuating the adjustment arrangement (24) depending on the tilt angle $(\gamma)$ and the shift (t), in order to bring the actual position $(L_i)$ into correlation with the nominal position (Ls).

**Revendications**

1. Procédé de réglage de la position d'une pièce (16) à symétrie de révolution par rapport à un axe de symétrie (A), comportant une surface supérieure (17) incurvée, dans un appareil de mesure (15) présentant un porte-pièce (23) qui peut être entraîné autour d'un axe de rotation (C) et peut être incliné par un ensemble de réglage (24) par rapport à l'axe de rotation (C) et peut être déplacé dans deux directions dans l'espace, à angle droit par rapport à l'axe de rotation (C), l'appareil de mesure (15) présentant une unité de capteur (18) destinée à mesurer des points de mesure $(x_{ij}, y_{ij}, z_{ij}, c_i)$ dans un système de coordonnées de machine (KM) de l'appareil de mesure (15), sur la surface supérieure (17) incurvée de la pièce (16), le procédé comprenant les étapes suivantes :

- S1 : mesure de plusieurs points de mesure $(x_{1j}, y_{1j}, z_{1j}, c_1)$ dans un plan de mesure (E) du système de coordonnées de machine (KM), sur la surface supérieure (17) de la pièce (16), dans une première position angulaire $(c_1)$ de la pièce (16) autour de l'axe de rotation (C),
- S2 : rotation du porte-pièce (23), avec la pièce (16), d'un angle de rotation $(\delta)$ autour de l'axe de rotation (C), jusqu'à une deuxième position angulaire $(c_2)$,
- S3 : mesure de plusieurs points de mesure $(x_{2j}, y_{2j}, z_{2j}, c_2)$ dans le même plan de mesure (E) du système de coordonnées de machine (KM), sur la surface supérieure (17) de la pièce (16), dans la deuxième position angulaire $(c_2)$ de la pièce (16),
- S4 : détermination d'un angle d'inclinaison $(\gamma)$ et d'un déplacement (t), à partir d'une position réelle (Li) de la pièce (16), décrite par les points de mesure $(x_{ij}, y_{ij}, z_{ij}, c_i)$ mesurés, jusqu'à une position de consigne (Ls) de la pièce (16), sachant que pour déterminer l'angle d'inclinaison $(\gamma)$ et le déplacement (t), les points de mesure $(x_{ij},$

$y_{ij}, z_{ij}, c_i)$ sont d'abord convertis en points de mesure $\left( x_{i,j}^{KW}, y_{i,j}^{KW}, z_{i,j}^{KW} \right)$ dans un système de coordonnées de pièce (KW) de la pièce (16), et sachant que pour déterminer l'angle d'inclinaison $(\gamma)$ et le déplacement (t), les points de mesure $\left( x_{i,j}^{KW}, y_{i,j}^{KW}, z_{i,j}^{KW} \right)$ dans le système de coordonnées de pièce (KW) sont insérés dans une géométrie de consigne connue de la surface supérieure (17) de la pièce (16), de telle sorte que l'écart entre la géométrie mesurée, décrite par les points de mesure $\left( x_{i,j}^{KW}, y_{i,j}^{KW}, z_{i,j}^{KW} \right)$, et la géométrie de consigne soit minime,
- S5 : activation de l'ensemble de réglage (24) en fonction de l'angle d'inclinaison $(\gamma)$ et du déplacement (t), en vue de faire coïncider la position réelle (Li) avec la position de consigne (Ls).

**EP 3 255 378 B1**

2. Procédé selon la revendication 1, **caractérisé en ce que** le système de coordonnées de machine (KM) présente un axes de coordonnées (ZM) qui est parallèle à l'axe de rotation (C) et deux axes de coordonnées (XM, YM) s'étendant à angle droit avec l'axe de rotation (C).

3. Procédé selon la revendication 2, **caractérisé en ce que** l'angle d'inclinaison ($\gamma$) déterminé présente respectivement une composante d'angle d'inclinaison ($\alpha$, $\beta$) autour de l'un des deux axes de coordonnées (XW, YW) du système de coordonnées de pièce (KW).

4. Procédé selon la revendication 2 ou 3, **caractérisé en ce que** le déplacement (t) déterminé présente respectivement une composante de déplacement ($t_x$, $t_y$) dans le sens de l'un des deux axes de coordonnées (XW, YW) du système de coordonnées de pièce (KW).

5. Procédé selon la revendication 4, **caractérisé en ce que** le déplacement (t) déterminé présente respectivement une composante de déplacement ($t_z$) dans le sens de l'axe des coordonnées (ZW) du système de coordonnées de pièce (KW) qui est orientée parallèlement à l'axe de rotation (C).

6. Procédé selon l'une des revendications précédentes, **caractérisé en ce qu'**à la suite de l'étape S5, on vérifie lors d'une étape S6 si la position réelle (Li) coïncide avec la position de consigne (Ls).

7. Procédé selon la revendication 6, **caractérisé en ce que**, si l'on a constaté à l'étape S6 que la position réelle (Li) et la position de consigne (Ls) ne coïncident pas avec une précision prédéfinie, on répète les étapes S1 à S6.

8. Procédé selon l'une des revendications précédentes, **caractérisé en ce que** la géométrie de consigne de la pièce (16) est prédéfinie de manière à ce qu'elle décrive en même temps la position de consigne (Ls).

9. Procédé selon la revendication 8, **caractérisé en ce que** chaque point de mesure $\left( x^{KW}_{i\,j}, y^{KW}_{i\,j}, z^{KW}_{i\,j} \right)$ est associé respectivement à un point cible ($P_{1j}$, $P_{2j}$) de la géométrie de consigne, et que, en fonction des vecteurs ($V_{ij}$) allant de chaque point de mesure $\left( x^{KW}_{i\,j}, y^{KW}_{i\,j}, z^{KW}_{i\,j} \right)$ au point cible ($P_{1j}$, $P_{2j}$) associé, on détermine l'angle d'inclinaison ($\gamma$) et le déplacement (t) de manière à ce que l'écart entre la géométrie mesurée et la géométrie de consigne soit minime.

10. Procédé selon l'une des revendications précédentes, **caractérisé en ce que** l'origine des coordonnées du système de coordonnées de pièce (KW) se situe sur l'axe de symétrie (A) de la pièce (16) à symétrie de révolution et sur la surface supérieure (17).

11. Procédé selon l'une des revendications précédentes, **caractérisé en ce que** les étapes S2 et S3 sont exécutées M fois, M étant un nombre naturel différent de zéro, de sorte que des points de mesure ($x_{ij}$, $y_{ij}$, $z_{ij}$, $c_i$) sont mesurés dans au moins deux positions angulaires ($c_1$, $c_2$), où un angle de rotation de consigne ($\delta_{soll}$) est égal à 180° divisé par M.

12. Procédé selon la revendication 11, **caractérisé en ce que** l'angle de rotation ($\delta$) réglé peut différer en valeur de l'angle de rotation de consigne ($\delta_{soll}$) au maximum de 5° ou 10°.

13. Procédé selon la revendication 7 et selon la revendication 11 ou 12, **caractérisé en ce qu'**avec un nombre prédéterminé de répétitions, un nombre M plus élevé de positions angulaires ($c_i$) permet d'obtenir une plus grande précision du réglage de l'axe de symétrie (A) de la pièce (16) le long de l'axe de rotation (C).

14. Procédé selon la revendication 7 et selon l'une des revendications 11 à 13, **caractérisé en ce que**, plus le nombre M de positions angulaires (ci), pour lesquelles une suite de valeurs de mesure de points de mesure ($x_{ij}$, $y_{ij}$, $z_{ij}$, $c_i$) est respectivement mesurée, est élevé, plus le nombre de répétitions nécessaires pour obtenir une précision prédéfinie du réglage de l'axe de symétrie (A) de la pièce (16) le long de l'axe de rotation (C) est faible.

15. Procédé selon l'une des revendications précédentes, **caractérisé en ce que**, lorsque la position d'axes de réglage (25, 26) de l'ensemble de réglage (24) n'est pas connue avec une précision suffisante, l'étape S5 est exécutée de la manière suivante :

- S5a : activation de l'unité de réglage (24) pour incliner la pièce (16) en fonction de l'angle d'inclinaison (y),
- S5b : rotation du porte-pièce (23) avec la pièce (16) jusqu'à une position angulaire ($c_i$), et mesure de plusieurs points de mesure ($x_{ij}$, $y_{ij}$, $z_{ij}$, $c_i$) dans le plan de mesure (E) du système de coordonnées de machine (KM), sur la surface supérieure (17) de la pièce (16), dans cette position angulaire ($c_i$),
- S5c : rotation du porte-pièce (23) avec la pièce (16) jusqu'à une autre position angulaire ($c_{i+1}$), et mesure de plusieurs points de mesure ($x_{i+1,j}$, $y_{i+1,j}$, $z_{i+1,j}$, $c_{i+1}$) dans le plan de mesure (E) du système de coordonnées de machine (KM), sur la surface supérieure (17) de la pièce (16), dans cette position angulaire (ci+i),
- S5d : détermination respectivement d'une valeur actuelle de l'angle d'inclinaison et du déplacement, à partir de la position réelle (Li) de la pièce (16) décrite par les points de mesure (($x_{ij}$, $y_{ij}$, $z_{ij}$, $c_i$) ; ($x_{i+1,j}$, $y_{i+1,j}$, $z_{i+1,j}$, $c_{i+1}$)) mesurés, jusqu'à la position de consigne (Ls) de la pièce (16), en utilisant les points de mesure (($x_{ij}$, $y_{ij}$, $z_{ij}$, $c_i$) ; ($x_{i+1,j}$, $y_{i+1,j}$, $z_{i+1,j}$, $c_{i+1}$) des étapes S5c et S5d,
- S5e : activation de l'ensemble de réglage (24) au moins en fonction de l'angle d'inclinaison ($\gamma$) de l'étape S5d, pour faire coïncider la position réelle (Li) avec la position de consigne (Ls).

16. Appareil de mesure (15) conçu pour l'alignement d'une pièce (16) à symétrie de révolution par rapport à un axe de symétrie (A), avec une surface supérieure (17) incurvée,
comprenant un porte-pièce (23) qui peut être entraîné autour d'un axe de rotation (C) et peut être incliné par un ensemble de réglage (24) par rapport à l'axe de rotation (C) et peut être déplacé dans deux directions dans l'espace, à angle droit par rapport à l'axe de rotation (C),
comprenant une unité de capteur (18) destinée à mesurer des points de mesure ($x_{ij}$, $y_{ij}$, $z_{ij}$, $c_i$) dans un système de coordonnées de machine (KM) de l'appareil de mesure (15), sur la surface supérieure (17) incurvée de la pièce (16), et comprenant un dispositif de commande (21) qui est conçu pour exécuter les étapes suivantes :

- S1 : mesure de plusieurs points de mesure ($x_{1j}$, $y_{1j}$, $z_{1j}$, $c_1$) dans un plan de mesure (E) du système de coordonnées de machine (KM), sur la surface supérieure (17) de la pièce (16), dans une première position angulaire ($c_1$) de la pièce (16),
- S2 : rotation du porte-pièce (23) avec la pièce (16), d'un angle de rotation ($\delta$), jusqu'à une deuxième position angulaire ($c_2$),
- S3 : mesure de plusieurs points de mesure ($x_{2j}$, $y_{2j}$, $z_{2j}$, $c_2$) dans le même plan de mesure (E) du système de coordonnées de machine (KM), sur la surface supérieure (17) de la pièce (16), dans la deuxième position angulaire ($c_2$) de la pièce (16),
- S4 : détermination d'un angle d'inclinaison ($\gamma$) et d'un déplacement (t), à partir d'une position réelle (Li) de la pièce (16) décrite par les points de mesure ($x_{ij}$, $y_{ij}$, $z_{ij}$, $c_i$) mesurés, jusqu'à une position de consigne (Ls) de la pièce (16), sachant que pour déterminer l'angle d'inclinaison ($\gamma$) et le déplacement (t), les points de mesure ($x_{ij}$, $y_{ij}$, $z_{ij}$, $c_i$) sont d'abord convertis en points de mesure $\left( x^{KW}_{i\,j},\ y^{KW}_{i\,j},\ z^{KW}_{i\,j} \right)$ dans un système de coordonnées de pièce (KW) de la pièce (16), et sachant que pour déterminer l'angle d'inclinaison ($\gamma$) et le déplacement (t), les points de mesure $\left( x^{KW}_{i\,j},\ y^{KW}_{i\,j},\ z^{KW}_{i\,j} \right)$ sont insérés dans une géométrie de consigne connue de la surface supérieure (17) de la pièce (16), de telle sorte que l'écart entre la géométrie mesurée, décrite par les points de mesure $\left( x^{KW}_{i\,j},\ y^{KW}_{i\,j},\ z^{KW}_{i\,j} \right)$, et la géométrie de consigne soit minime,
- S5 : activation de l'ensemble de réglage (24) en fonction de l'angle d'inclinaison ($\gamma$) et du déplacement (t), en vue de faire coïncider la position réelle (Li) avec la position de consigne (Ls).

Fig.1

Fig.2

Fig.3a

Fig.3b

Fig.3c

Fig.4

Fig.5

Fig.6

Fig.7

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4731934 A
- DE 10102383 A1
- DE 10340851 A1
- DE 102007015947 B4
- WO 2009124767 A1
- DE 102012023377 B3
- DE 19651232 C1
- US 20110258867 A1